Europäisches Patentamt

European Patent Office

Office européen des brevets

(11) Veröffentlichungsnummer: **0 378 843**

**A1**

## EUROPÄISCHE PATENTANMELDUNG

(21) Anmeldenummer: 89123773.7

(22) Anmeldetag: 22.12.89

(51) Int. Cl.5 **A01C 17/00**

(30) Priorität: 19.01.89 DE 3901426

(43) Veröffentlichungstag der Anmeldung:
25.07.90 Patentblatt 90/30

(84) Benannte Vertragsstaaten:
**DE FR GB**

(71) Anmelder: **Amazonen-Werke H. Dreyer GmbH
& Co. KG
Am Amazonenwerk 9-13
D-4507 Hasbergen-Gaste(DE)**

(72) Erfinder: **Dreyer, Heinz, Dr.Dipl.-Ing.
Am Amazonenwerk 7
D-4507 Hasbergen(DE)**

(54) **Schleuderdüngerstreuer.**

(57) Schleuderdüngerstreuer mit einem Vorratsbehälter, einer Dosiereinrichtung und unterhalb der Dosiereinrichtung angeordneter Streueinrichtung, wobei im unteren Bereich des Vorratsbehälters eine Rühreinrichtung angeordnet ist, welche beispielsweise über einen Kurbel- oder Excentermechanismus in hin- und hergehende bzw. pendelnde Bewegung versetzt wird. Um mit einfachsten Maßnahmen ein schonendes Rührwerk zu schaffen, ist vorgesehen, daß zwischen der Eingangswelle (11) des Getriebes (10) und/oder der Schleuderscheibenantriebswelle (8) ein Untersetzungsgetriebe (14) ins Langsame angeordnet ist.

EP 0 378 843 A1

## Schleuderdüngerstreuer

Die Erfindung betrifft einen Schleuderdüngerstreuer gemäß des Oberbegriffes des Patentanspruches 1.

Ein derartiger Schleuderdüngerstreuer ist bei-spielsweise durch die europäische Offenlegungs-schrift 02 25 836 oder die deutsche Patentschrift 35 32 711 bekannt. Bei diesem Schleuderdüngerstreuer wird der Kurbel- oder Excentermechanismus, über welchen die Rühreinrichtung in hin- und hergehenden bzw. pendelnde Bewegung versetzt wird, mit der Eingangsdrehzahl des Getriebes von der Zapfwelle aus bzw. mit der hohen Schleuderscheibendrehzahl angetrieben. Hierdurch besteht die Gefahr, daß sehr viel Dünger, vor allem druckempfindlicher Dünger, zerschlagen wird.

Der Erfindung liegt daher die Aufgabe zugrunde, mit einfachsten Maßnahmen ein schonendes Rührwerk zu schaffen.

Diese Aufgabe wird erfindungsgemäß dadurch gelöst, daß zwischen der Eingangswelle des Ge-triebes und/oder der Schleuderscheibenantriebs-welle ein Untersetzungsgetriebe ins Langsame angeordnet ist. Infolge dieser Maßnahme wird dann von der Ausgangswelle des Untersetzungsgetriebes der Kurbel- oder Excentermechanismus für den Antrieb der Rühreinrichtung mit einer wesentlich niedrigeren Drehzahl als die Eingangsdrehzahl des Getriebes oder die Schleuderscheibenwelle angetrieben. Hierdurch ergibt sich eine langsame hin-und hergehende bzw. langsame pendelnde Bewegung, so daß ein schonendere Rührwirkung erzielt wird. Die Düngerkörner, selbst druckempfindlichste, werden nicht zerschlagen. Hierdurch ist die Voraussetzung geschaffen, daß der Dünger gleichmäßig ausgebracht werden kann. In vorteilhafter Weise trägt die Drehzahl des Kurbel- oder Excenterantriebes für die Rühreinrichtung etwa 200 U/min.

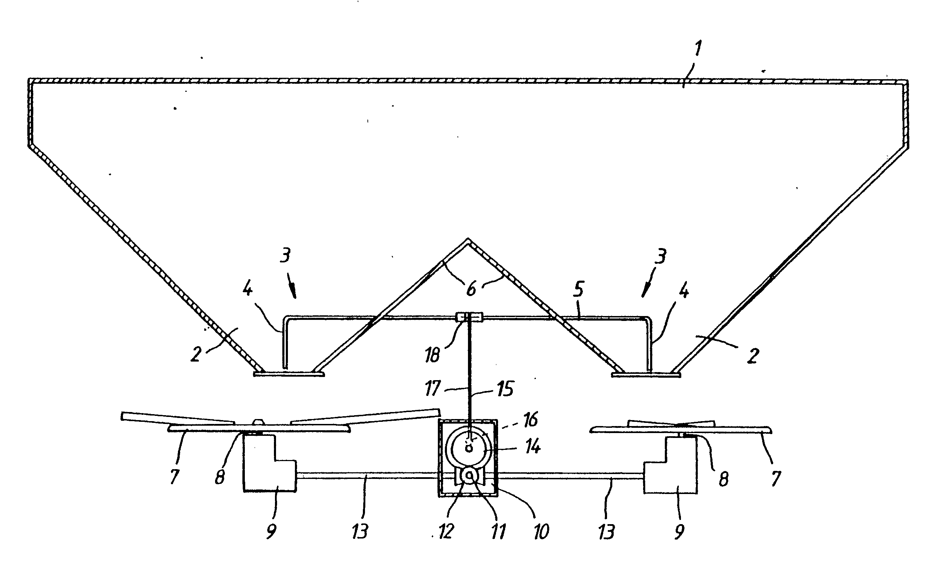

Weitere Vorteile und Einzelheiten der Erfindung sind der Beispielsbeschreibung und der Zeichnung zu entnehmen. Hierbei zeigt die Zeichnung einen erfindungsgemäß ausgebildeten Schleuderdüngerstreuer in der Ansicht von vorne im Teilschnitt und in Prinzipdarstellung.

Der Schleuderdüngerstreuer weist einen Vorratsbehälter 1 auf. In dem unteren trichterförmigen Bereich 2 des Vorratsbehälters ist die Rühreinrichtung 3 angeordnet. Die Rühreinrichtung 3 weist die Rührelemente 4 auf, welche an der Rührwelle 5 befestigt sind. Die Rührwelle 5 ist an den Trichterwänden 6 gelagert.

Unterhalb der trichterförmigen Bereiche 2 des Vorratsbehälters 1 sind die Schleuderscheiben 7 auf den Getriebeausgangswellen 8 der Winkelgetriebe 9 angeordnet. Im mittleren Bereich befindet sich das Zentralgetriebe 10 mit der Eingangswelle 11, welche über eine nicht dargestellte Gelenkwelle von der Schlepperzapfwelle oder von einem Ölmotor angetrieben wird. Dieses Zentralgetriebe 10 weist den Winkeltrieb 12 auf, über welchen die Wellen 13 angetrieben werden. Die Wellen 13 sind mit den Winkelgetrieben 9 verbunden, so daß die Schleuderscheiben 7 rotierend antreibbar sind. Des weiteren weist das Zentralgetriebe 10 das Untersetzungsgetriebe 14 auf. Von dem Untersetzungsgetriebe 14 wird der Kurbel- oder Excenter mechanismus 15 angetrieben. Hierzu weist das Untersetzungsgetriebe 14 den Kurbelzapfen 16 auf. An diesem Kurbelzapfen 16 ist die Pleuelstange 17 des Exenterantriebes 15 angeordnet. Die Pleuelstange 17 ist mit dem Abstandshebel 18, der an der Rührwelle 15 befestigt ist, verbunden. Somit werden über den Excentermechanismus 15 die Rührelemente 4 in pendelnde Bewegungen hin- und herbewegt. Das Untersetzungsgetriebe 14 ist somit zwischen der Eingangswelle 11 und dem Excenter-mechanismus angeordnet. Das Untersetzungsge-triebe 14 weist also eine Übersetzung ins Langsame für den Exentermechanismus auf. Die Drehzahl des Kurbelzapfens 16 beträgt etwa 200 U/min.

### Ansprüche

1. Schleuderdüngerstreuer mit einem Vorratsbehälter, einer Dosiereinrichtung und unterhalb der Dosiereinrichtung angeordneter Streueinrichtung, wobei im unteren Bereich des Vorratsbehälters eine Rühreinrichtung angeordnet ist, welche beispielsweise über einen Kurbel- oder Excentarme-chanismus in hin- und hergehende bzw. pendelnde Bewegung versetzt wird, dadurch gekennzeichnet, daß zwischen der Eingangswelle (11) des Getriebes (10) und/oder der Schleuderscheibenantriebswelle (8) ein Untersetzungsgetriebe (14) ins Langsame angeordnet ist.

2. Schleuderdüngerstreuer nach Anspruch 1, dadurchgekennzeichnet, daß die Drehzahl des Kurbel- oder Excenterantriebes (15) etwa 200 U/min beträgt.

EP 0 378 843 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-3532756 (BERGMANN) <br> * Spalte 4, Zeilen 35 - 54; Anspruch 6; Figur 3 * | 1 | A01C17/00 |
| Y | | 2 | |
| Y | EP-A-138127, (NIEMEYER SÖHNE) <br> * Seite 4, Zeile 31 - Seite 5, Zeile 16; Figur 3 * | 2 | |
| X | US-A-2526081 (MEINCKE) <br> * Spalte 5, Zeile 49 - Spalte 6, Zeile 4; Figuren 1, 2 * | 1 | |

RECHERCHIERTE SACHGEBIETE (Int. Cl.5)

A01C

Der vorliegende Recherchenbericht wurde für alle Patentansprüche erstellt

| Recherchenort | Abschlußdatum der Recherche | Prüfer |
|---|---|---|
| DEN HAAG | 19 APRIL 1990 | HERYGERS J.J. |